# EUROPEAN PATENT APPLICATION

(11) **EP 4 610 021 A1**
(43) Date of publication of application: **03.09.2025**
(21) Application number: 24160907.2
(22) Date of filing: 01.03.2024
(51) Int. Cl.: B29C 49/48, B29C 49/04, B29C 49/06, B29C 49/24, B29L 31/00, B65B 3/00, B65D 1/02, B67C 3/22

(54) **PROCESS AND SYSTEM FOR PRODUCING CONTAINERS FOR IRRIGATION APPLICATION ON A PRODUCTION LINE FOR PRODUCING INFUSION CONTAINERS**

(71) Applicant: B. Braun Melsungen AG, 34212 Melsungen (DE)
(72) Inventor: LAMPRECHT, Volker, 34212 Melsungen (DE); GAEBLER, Thomas, 34212 Melsungen (DE)
(74) Representative: Maiwald GmbH

(57) **Abstract**

A process for producing a container, the process comprising the steps of selecting in a mold selection step a mold for a base container from a group of molds consisting of molds for a base container for infusion application and molds for a base container for irrigation; mold blowing, preferably extrusion mold blowing, in a blowing step the base container in the mold, whereby the base container comprises at least one opening; removing in a removal step the base container from the mold; filling in a filling step the base container with a liquid; closing in a closing step the base container thereby forming the produced container; sterilizing in a sterilization step the produced container; wherein the container is suitable for infusion application or for irrigation application

## Description

### Technical Field of the Invention

The present invention is located in the field of the production of containers for irrigation application.

### Background of the Invention

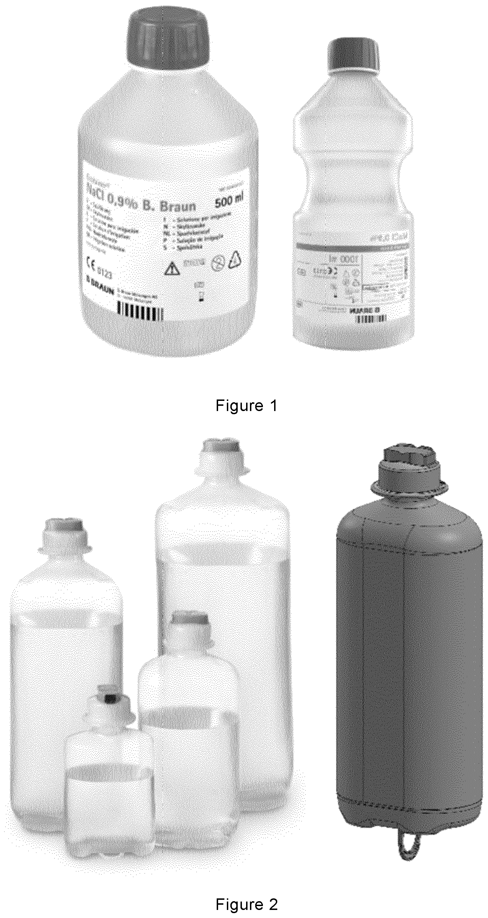

Irrigation containers are usually used to drain and wash surgery fields, such as body cavities, tissues, wounds, and burns, during surgeries. Typically, irrigation containers are bottles comprising a sterile liquid, wherein the bottle should be openable by hand (cf. Figure 1). Usually, during operation, the sterile liquid is poured out thereby ensuring that the sterile status of the liquid is kept intact up until the liquid contacts the surgery field. Nowadays, normally blown bottles made from plastic material are used to achieve this simple functionality. As irrigation bottles are usually emptied by hand either only by pouring or also additionally by applying pressure to the walls of the container, a collapsible shape would have the disadvantage that the handling of the irrigation container becomes problematic. Usually, irrigation containers have the shape of cylinders based on a base area having the shape of a circle. This ensures that the containers do not collapse during emptying. Hence, containers for irrigation application usually resemble normal water bottles.

Containers for infusion application, on the other hand, have usually rectangular-oval shaped base areas, since this geometry favors the collapsing behavior during the use for infusion of solutions and makes an approximately complete emptying of this container possible in the first place (cf. Figure 2). According to EP 1 663 100 A1, such containers for infusion application are usually manufactured without a recessed grip and have a suspension tab on the base.

Containers for irrigation application and containers for infusion application are produced on production lines, which comprise a molding machine including respective molds for the containers to be produced, preferably mold blowing machines. Furthermore, the produced containers are put into carriers, which are connected to a conveyor line, and transported to further machines such as machines for further adapting the shape, e.g., cutting, machines for adding further parts, such as caps, machines for filling the containers with irrigation or infusion liquids, machines for labelling the containers, and machines for sterilizing the filled containers.

### Summary of the Invention

Currently, containers for irrigation application cannot be produced on a production line for producing containers for infusion solutions. Reason is that their shapes differ significantly due to their different requirements in view of collapsibility. Hence, for the production of both, containers for irrigation application and for infusion application, two production lines must be provided and maintained resulting in higher space requirements, higher maintaining costs etc. Alternatively, the production line can be modified. However, such modification has the effect that a container for infusion application cannot be produced on the production line anymore. Furthermore, the modification affords changing major parts of the production line resulting in further costs and time without production.

Thus, it has been surprisingly found out in the present invention that above-mentioned object can be solved by a process for producing a container, the process comprising the steps of selecting in a mold selection step a mold for a base container from a group of molds consisting of molds for a base container for infusion application and molds for a base container for irrigation; mold blowing, preferably extrusion mold blowing, in a blowing step the base container in the mold, whereby the base container comprises at least one opening; removing in a removal step the base container from the mold; filling in a filling step the base container with a liquid; closing in a closing step the base container thereby forming the produced container; sterilizing in a sterilization step the produced container; wherein the container is suitable for infusion application or for irrigation application.

It has been further found out that above-mentioned object of the present invention can be achieved by a system for producing containers, wherein the containers are suitable for infusion application or for irrigation application, the system comprising a mold selection unit for selecting a mold for a base container comprising at least one opening from a group of molds consisting of molds for a base container for infusion application and molds for a base container for irrigation application, a holding means selection unit application for selecting a holding means for the base containers from a group of holding means according to the volume of a negative shape of the mold, a blow molding unit for blow molding the base container in the mold, a transporting unit comprising the holding means for the base containers, a positioning unit for positioning the base container in the holding means on the transporting unit, a closing unit for closing the base containers in the holding means on the transporting unit.

The process of the present invention has the advantage that it can be carried out on a production line for container for infusion application. Likewise, the system according to the present invention has the advantage that it can produce both containers for infusion application and containers for irrigation application.

### Brief Description of the Drawings

- Figure 1: shows containers for irrigation application usually produced in the prior art.
- Figure 2: shows containers for infusion application usually produced in the prior art.
- Figure 3: shows a schematic view of a part of the container produced by a process or system according to the present invention.
- Figure 4: shows a schematic view of a mold used in a process or system according to the present invention.

### Reference signs

The following reference signs are used throughout the description and the figures.
- **1**: bottom part
- **2**: body part
- **3**: upper body part
- **4**: lower body part
- **5**: lower bottom area
- **6**: lower top area
- **7**: first transition part
- **8**: middle body part
- **9**: middle bottom area
- **10**: middle top area
- **11**: second transition part
- **12**: upper bottom area
- **13**: at least one outlet
- **a**: curved area of the sigmoid function of the first transition part closer to the lower body part
- **b**: curved area of the sigmoid function of the first transition part closer to the middle body part
- **c**: curved area of the sigmoid function of the second transition part closer to the upper body part
- **d**: curved area of the sigmoid function of the second transition part closer to the middle body part
- **A**: mold selection unit
- **B**: holding means selection unit
- **C**: blow molding unit
- **D**: transporting unit
- **E**: positioning unit
- **F**: filling unit
- **G**: closing unit
- **H**: cap assembling unit
- **I**: sealing unit
- **J**: cap selection unit
- **K**: rinsing unit
- **L**: labeling unit

### Definitions

The term "*irrigation solution*" as used herein denotes a liquid used in irrigation application. Irrigation solutions have to be sterile. An irrigating solution is suitable for killing microorganisms, disrupting the biofilm on surgery objects, inactivating virulence factors such as endotoxin, dissolving pulp-tissue remnants, removing hard-tissue debris and the smear layer created during instrumentation or prevent their formation, providing lubrication for instruments, and being biocompatible. Usually, an irrigation solution is based on water. Optionally, it can be mixed with an adjuvant. Adjuvants may be sodium chloride, sodium hypochlorite, potassium chloride, calcium chloride, chlorhexidine, ethylenediamine tetraacetic acid, citric acid, etidronic acid, maleic acid, sodium lactate, or mixtures thereof. Most preferably, irrigation solutions are selected from the list consisting of 0.9% aqueous sodium chloride solution, Ringer's lactate solution, and distilled water.

The term "*surgery object*" as used herein denotes an object, preferably body part, which can be treated by surgery, wherein the body part is preferably selected from a group consisting of body cavities, tissues, wounds, bones, and burns.

The term "*irrigation*" or "*irrigation application*" as used herein denotes the process of mechanical cleansing of surgery objects during topical, intra- or postoperative surgical interventions using an irrigation solution. This is typically achieved by pouring the irrigation solution on the surgery object and rinsing it, which is also known as "*direct irrigation*". Alternatively, such a process is achieved by pouring out liquid in an intermediate recipient (like a kidney bowl), from which the solution is then taken out with a syringe to be spread onto the object, which is also known as "*indirect irrigation*". The goal of the irrigation is to clear a surgical object from, e.g., blood and tissue to keep the surgery object sterile, prevent infections, moisten the surgery object, wound tamponades, cloths, bandages, and dressings, cleansing of operating instruments and accessories, and/or make the object visible for the surgeon. It is understood that prior to and/or during the process of irrigation, the container comprising the irrigation solution has to be put aside, at least one time.

The term "*upright position*" as used herein denotes an orientation of the bag of the present invention in that each distance of each point in the base part of the bag to the center of the gravitational force is smaller than in any point of the upper part and optionally the top part of the bag.

The term "*used in an upright position*" as used herein in particular in connection with the irrigation application denotes an irrigation process, in which the container is used such that the container is in upright position when being put aside.

The term "*sterile*" as used denotes the status of an object having a significantly reduced number of bacteria and/or viruses on its surface to reduce the risk of an infection. In particular, the term "*sterile*" denotes an object or substance, which has a bioburden load of lower than 10⁻⁶. The bioburden load can be measured i.e., according to ISO 11737-1:2018.

The term "*sterilization*" as used herein denotes a method to destroy all forms of living microorganisms from a substance. As there is always a certain probability of at least one microorganism to survive such procedure, the aim of sterilization is the reduction of initially present microorganisms or other potential pathogens. Generally, sterilization is accepted to be achieved if the bioburden load of the substance of object to be sterilized is lower than 10⁻⁶. The bioburden load can be measured i.e., according to ISO 11737-1:2018. Sterilization can be achieved using several methods. In one sterilization process the object is heated up to at least 105 °C to achieve a sterile object. Thereby, the object should not be deformed by the elevated temperature. Preferably, the heating step is performed in an autoclave. In another sterilization process, the object is brought into contact with toxic gases such as a mixture of ethylene oxide and carbon dioxide. Filtration methods are also used to sterilize liquids, i.e., by using membrane filters, Seitz filters, and/or candle filters. Finally, sterilization can be achieved by indirect energy import into or onto the object, e.g., by ultrasonic waves, ultraviolet light, as well as by high energy particles (such as electrons, gamma- or X-rays).

The term "*liquid-tight*" as used herein denotes a quality of an object to function as a barrier for a liquid, preferably for a water-based liquid.

The term "*oval shape*" as used herein denotes a plane curve, which is simple, i.e., not self-intersecting, convex, and closed. Preferably, an oval shape has at least one symmetry axis, more preferably two symmetry axes, and most preferably two symmetry axes, wherein the angle between these two symmetry axes is a rectangular angle. Specific oval shapes are circles, ellipsoids, rectangles with quadrant corners, and stadiums.

The term "*rectangular-oval shape*" as used herein denotes a rectangle with quadrant corners or a stadium shape, preferably a rectangle with quadrant corners.

The term "*cylindrical shape*" as used herein denotes a shape of all points on all lines which are parallel to a given main axis and which pass through a fixed plane curve in a plane not parallel, preferably perpendicular, to the main axis, wherein the main axis preferably passes through the centroid of the fixed plane curve. The lines have a defined length, which defines the length of the cylindrical shape. Hence, in a cylindrical shape, the fixed plane curve is identical at both ends. Most preferably, the main axis of the fixed plane curve is the circular symmetry axis of the fixed plane curve.

The term "*cone*" as used herein denotes a cylindrical shape, in which the fixed plane curves at both ends are not identical and wherein each line pass though the first and the second fixed plane are not parallel to the main axis. Preferably, the main axes of both fixed planes are identical. In a preferred embodiment of the cone, the fixed curve having the smaller surface can be a point.

The term "*collapsible container"* as used herein denotes a container, which changes its shape during emptying a fluid enclosed in the container from the container. Usually, this occurs in that opposite walls of the container move towards each other thereby reducing the inner volume of the container. During the process of emptying the collapsible container usually no air is sucked through the opening of the container. Thus, the emptying process is a continuous and smooth process. On the other hand, an at least partially incollapsible container does not allow for at least two walls to move towards each other. Hence, during emptying a fluid enclosed by the container from the container, from time to time air is sucked through the opening of the container, thereby interrupting the emptying process.

### Detailed Description of the Invention

In the following, the present invention will be described in detail. Thus, the process according to the present invention for producing a container for irrigation application and the system according to the present invention for producing a container for irrigation application are described in the following.

### Process

As already outlined above, the present invention is concerned with a process for producing a container, the process comprising the steps of:
- selecting in a mold selection step a mold for a base container from a group of molds consisting of molds for a base container for infusion application and molds for a base container for irrigation;
- mold blowing in a blowing step the base container in the mold, whereby the base container comprises at least one opening;
- removing in a removal step the base container from the mold;
- filling in a filling step the base container with a liquid;
- closing in a closing step the base container thereby forming the produced container;
- sterilizing in a sterilization step the produced container;
wherein the container is suitable for infusion application or for irrigation application.

The step of selecting a mold allows for selecting a mold, which allows for the production of a container for irrigation application. Such a mold is described in detail later herein. It should be understood that the selection step can be decisive for the whole process but could also be implemented in a way that the selection is made during the running process. Hence, the mold selection step could also be a step, in which the mold is selected on the fly. Thus, the process can produce different types and sizes of containers during runtime. The mold selection step even allows for selecting the mold per each produced bottle. It should be understood that the mold selection step not only includes selecting the mold, but also exchanging the mold used in the subsequent mold blowing step by the selected mold. If the mold selection step is carried out often, even once per container, in the process during lifetime, the diversity of product can be enhanced, but the process is slowed down. If the mold selection step is carried out less often, even just once, in the process during lifetime, the diversity of product can be enhanced, but the process is slowed down. Usually, the mold selection step takes between 5 s and 15 s.

In the blow molding step, the selected mold is used to produce the base container. The blow molding step can be an extrusion blow molding step, an injection blow molding step, or an injection stretch blow molding step.

In the extrusion blow molding step, polymer is extruded in a parison, preferably a tube-shaped parison. The parison is inserted into the mold, preferably in that the mold comprises, preferably consists of two or more parts, which are disassembled (i.e. opened) before inserting the parison, and which are assembled (i.e. closed) after insertion of the parison. The mold preferably has a shape in that the assembled mold closes the tube-shaped parison at one end and allows for inserting pressurized gas, preferably air, into the tube-shaped parison via the other end allowing for inflating the parison onto an inner surface of the mold. The mold preferably cools the extruded material of the parison. The advantage of extrusion blow molding is that the process step is simple and cheap. Another advantage is, even if not often used yet, that by extrusion multilayered materials and thus containers can be obtained.

In the injection blow molding step, the preform is formed by injection molding on a hollow core pin in a first step. Subsequently the preform and the core pin are added into the mold, the preform is heated and inflated by pressurized air through the hollow core pin allowing for inflating the preform onto an inner surface of the mold. The mold preferably cools the extruded material of the preform and after disassembling. The injection blow molding step is advantageous, as the dimensional stability and thickness of the neck portion can be controlled as it is formed in the injection mold step before blowing. On the other hand, multilayered material is harder to achieve due to the injection molding step. Hence, barrier properties cannot be easily added into the process.

The injection stretch blow molding step adds a step of stretching and thus biaxially orienting the polymer before the blowing step.

The polymer material used for the container is the material typically used for blow molding containers for irrigation application. Preferably, the polymer material is selected from the list consisting of polyethylene, polypropylene, polyethylene terephthalate, polyamide, ethylene vinyl alcohol, or mixture thereof. Such material provides the optimal balance between flexibility, rigidity, chemical inertness, and gas barrier properties. Furthermore, it is advantageous if the skilled person can see from the outside how much solution is left in the container. Hence, preferably, the polymer material of the container of the present invention has a haze value measured according to ASTM D1003, Procedure B, of less than 30%, more preferably less than 20%, even more preferably less than 10%, and most preferably less than 5%.

Usually, the removal step comprises disassembling (i.e. opening) the mold into at least two parts, thereby ejecting the molded base container. If the blow molding step is an extrusion blow molding step, due to the assembling (i.e. closing) of the mold around the parison, polymer material of the parison is usually pinched off. Hence, preferably, if the blow molding step is an extrusion blow molding step, the removal step comprises a final step of removing the pinched-off material, preferably by spin trimming. On the other hand, if the blow molding step is an injection blow molding step or an injection stretch blow molding step, no material needs to be removed from the blown base container.

Usually, the filling step is carried out by holding the base container in a holding means and filling the base container with a liquid, preferably by a filling jet. Preferably, the liquid comprises, preferably consists of an irrigation solution. As the filled container is sterilized after sealing, this step does not necessarily need to be a sterile step.

The closing step can be one step only. One preferred example for such a step is a mirror welding step, in which the lower part of a cap and a protruding part at the bottle neck are heated up with a preheated piece of metal, whereby the surfaces are molten. Subsequently, the two surfaces are placed together and thus sealing is achieved.

However, preferably, the closing step comprises, more preferably consists of, the following steps:
- assembling in a cap assembling step a cap to the at least one opening of the base container;
- sealing in a sealing step the cap to the base container thereby forming the produced container.

In the cap assembling step, the cap is assembled in the at least one opening to allow for the subsequent sealing to provide a liquid-tight seal.

In a first preferred embodiment of the cap assembling step, the at least one opening is formed by a cylindrical tube in at least one wall of the container, wherein the cylindrical tube extends from the at least one wall, and the cap comprises a cylindrical tube, wherein the inner diameter of the cylindrical tube of the cap is larger than the outer diameter of the cylindrical tube of the opening, and wherein the cap assembling step comprises the step of putting the cylindrical tube of the cap over the cylindrical tube of the opening.

Even more preferably, in the first preferred embodiment of the cap assembling step, the inner surface of the cylindrical tube of the cap comprises a thread and the outer surface of the cylindrical tube of the opening comprises a counter thread to said thread, and wherein the cap assembling step comprises the step of screwing the cylindrical tube of the cap on the cylindrical tube of the opening.

Most preferably, in the first preferred embodiment of the cap assembling step, the cylindrical tube of the cap comprises a flange, preferably at the edge of the cylindrical tube, and the cylindrical tube of the opening comprises a flange at the outer surface, and the cap assembling step comprises the step of putting the cylindrical tube of the cap over the cylindrical tube of the opening or screwing the cylindrical tube of the cap on the cylindrical tube of the opening, until the flange of the cylindrical tube of the cap and the flange of the cylindrical tube of the opening are in contact.

In a first preferred embodiment of the sealing step, preferably corresponding to the first preferred embodiment of the cap assembling step, the assembled cap and opening are provided with a material, which ensures that the assembly is liquid-tight. Furthermore, the material assures that the assembly can withstand pull forces. The material is usually a polymer material, which is molten, shrunk, or extruded around the opening and cap. Preferably, the sealing step comprises the step of melting, shrinking, or extruding polymer material around the assembly of the cap and the opening.

The step of extruding the polymer around the assembly of the cap and the opening is preferably carried out using extruded polymer and a sealing mold. Hence, preferably, the step of extruding the polymer around the assembly of the cap and the opening comprises the steps of putting a mold around the assembly of the cap and the opening, extruding polymer into the mold, cooling the polymer until solidification, and removing the mold from the extruded polymer. Preferably, the step of putting the mold around the assembly of the cap and the opening comprises the step of putting the mold around the flanges of the cylindrical tubes of the cap and the opening.

The step of shrinking polymer around the assembly of the cap and the opening is preferably carried out using a shrinkable seal, preferably a heat shrinkable seal, and a shrinking device, preferably a heat emitting device. Hence, preferably, the step of shrinking polymer material around the assembly of the cap and the opening comprises the steps of putting a seal comprising a shrinkable polymer, preferably in the shape of a ring, around the assembly of the cap and the opening and shrinking the polymer with the help of the shrinking device. Preferably, the step of putting the seal around the assembly of the cap and the opening comprises the step of putting the seal around the flanges of the cylindrical tubes of the cap and the opening.

The step of melting polymer around the assembly of the cap and the opening is preferably carried out using a meltable seal, preferably an overmold ring, and a melting device, preferably a heat emitting device. Hence, preferably, the step of melting polymer material around the assembly of the cap and the opening comprises the steps of putting a meltable seal, preferably an overmold ring, around the assembly of the cap and the opening, melting the polymer with the help of the melting device, cooling the polymer until solidification. Preferably, the melting device is a heatable mold. Hence, the step of melting the polymer with the help of the melting device comprises putting the heatable mold around the seal put over the assembly of the cap and the opening and heating the mold to melt the seal. Preferably, the step of putting the meltable seal and/or putting the heatable mold around the assembly of the cap and the opening comprises the step of putting the meltable seal and/or the heatable mold around the flanges of the cylindrical tubes of the cap and the opening. The meltable seal, preferably the overmold ring, comprises, preferably consists of, a polymer material, which melts at temperatures in the range of from 210 to 270 °C.. Most preferably, the material of the meltable seal, preferably overmold ring, comprises, preferably consists of, a polymer material selected from polyethylene and polypropylene.

In a second preferred embodiment, the cap assembly step, the at least one opening is formed by a cylindrical tube in at least one wall of the container, wherein the cylindrical tube extends from the at least one wall, and the cap comprises a cylindrical tube, wherein the inner diameter of the cylindrical tube of the cap is larger than the outer diameter of the cylindrical tube of the opening, and wherein the cap assembling step comprises the step of putting a cylindrical lid on the at least one opening, preferably partially protruding into the at least one opening, and subsequently putting the cylindrical tube of the cap over the cylindrical tube of the opening.

Even more preferably, in the first preferred embodiment of the cap assembling step, the inner surface of the cylindrical tube of the cap comprises a thread and the outer surface of the cylindrical tube of the opening comprises a counter thread to said thread, and wherein the cap assembling step comprises the step of putting the cylindrical tube of the cap over the cylindrical tube of the opening until the thread and the counter thread are contacted.

In a second preferred embodiment of the sealing step, preferably corresponding to the second preferred embodiment of the cap assembling step, the assembled cap is screwed on the cylindrical tube of the opening thereby putting pressure in the lid and sealing the at least one opening.

Most preferably, in the second preferred embodiment of the sealing step, the cylindrical tube of the cap comprises a tamper evidence part and wherein the cap is screwed until a position is reached, which causes the tamper evidence part to be destroyed when being unscrewed.

In a preferred embodiment of the present invention, the process comprises the step of rinsing in a rinsing step at least the inner surface of the base container. Preferably, the rinsing step is carried out after the blow molding step and prior to the filling step. The rinsing step is preferably carried out by filling a fluid into the base container and removing the fluid again. The filling step of the rinsing step is preferably carried out by holding the base container in a holding means and filling the base container with a fluid, preferably by a filling jet. In one embodiment, the fluid can be a liquid. Preferably, the liquid comprises, preferably consists of, a liquid selected from the list consisting of distilled water and irrigation solution. The fluid removal step of the rinsing step is preferably carried out by suction means, which are placed at the bottom of the base container via the opening or by pouring the liquid, preferably by rotating the holding means. Preferably, the rinsing step is carried out using the same means as the filling step of the process according to the present invention. Preferably, however, the fluid is ionized gas, more preferably ionized air. Reason is that usually, the container is electrically charged after the blow molding step. This results in attraction of dust and particles, which tend to stick to the container walls due to the electrostatical forces. In most applications, it is not allowed to use ionized water to rinse the container, but only deionized water. However, deionized water does not allow for removal of the electrostatical charge. Hence, ionized air is used, which removes the electrostatical charged from the container and removes dust and particles at the same time.

More preferably, the process according to the present invention further comprises the step of adjusting in a rinsing adjustment step the configuration of the rinsing step based on the selected mold and/or the blow molding conditions. Preferably, the rinsing adjustment step is carried out before the rinsing step. Preferably, the rinsing adjustment step is carried out after the mold selection step. Most preferably, the rinsing adjustment step is carried out in parallel to the blow molding step. This reduces waiting times. In the rinsing adjustment step, the rinsing means are adjusted in view of the liquid to be used for rinsing and optionally for the type of rinsing, i.e., with or without pressure, volume, temperature, removal means selection etc. The configuration of the rinsing step depends on various parameters. One parameter is the size of the base container. Larger volumes require larger amounts of rinsing liquids, but might also require different types of rinsing jets, pressures etc. Another parameter is the type of application the container is intended for. Depending on the type of application, i.e., irrigation or infusion, the rinsing might be carried out with respective irrigation solutions or infusion solutions.

Preferably, the cap is selected from the list consisting of a tear-off cap, a break-off cap, a screw-off cap, a twist-off cap, a peel-off cap, a flip-flop cap, a valve cap, and combinations thereof.

The same considerations apply for the filling step of the process according to the present invention. Hence, preferably, the process according to the present invention further comprises the step of adjusting in a filling preparing step the configuration of the filling step based on the selected mold, the blow molding conditions, and/or the rinsing configuration. Preferably, the filling preparing step is carried out before the filling step. Preferably, the filling preparing step is carried out during the rinsing step. This reduces waiting times. In the filling preparing step, the filling means are adjusted in view of the liquid to be used for filling and optionally for the type of filling, i.e., with or without pressure, volume, temperature etc. The configuration of the filling step depends on various parameters. One parameter is the size of the base container. Larger volumes require larger amounts of filling liquids, but might also require different types of filling jets, pressures etc. Another parameter is the type of application the container is intended for. Depending on the type of application, i.e., irrigation or infusion, the filling might be carried out with respective irrigation solutions or infusion solutions.

Moreover, preferably, the process according to the present invention further comprises the step of selecting in a cap selecting step a cap based on the application of the base container of the selected mold.

Usually, the containers for irrigation application and/or infusion application are labelled to be clearly identified. Therefore, the process according to the present invention further comprises the step of labeling in a labeling step the produced container. The labeling step can be carried out by printing information on a paper sheet and gluing or welding the paper sheet onto the at least one wall of the base container. Alternatively, the information can be printed directly on the base container. Hence, not necessarily, but preferably, the labeling step is carried out after the sterilization step of the process according to the present invention. As the type of label and in particular the information printed thereon depends on the type of container produced and the application thereof, the process according to the present invention further comprises prior to the filling step the step of preparing in a label preparing step the format of the label used in the labeling step based on the base container of the selected mold. Thereby, the type of application and the size of the container are important parameters for the configuration. However, also other information such as production date or batch information can be labeled on the container.

Finally, to ensure the quality of the produced containers, the process of the present invention preferably comprises the step of inspecting in an inspecting step the integrity of the produced container. It should be understood that the process of the present invention preferably comprises more than one inspecting step. For example, one inspecting step could be carried out after the sterilization process to ensure the final product quality, while another inspecting step could be carried out after the blow molding step to ensure the quality of the produced base container.

### System

As also already outlined above, the present invention is concerned with a system for producing containers, wherein the containers are suitable for infusion application or for irrigation application, the system comprising:
- a mold selection unit (**A**) for selecting a mold for a base container comprising at least one opening from a group of molds consisting of molds for a base container for infusion application and molds for a base container for irrigation application,
- a holding means selection unit (**B**) application for selecting a holding means for the base containers from a group of holding means according to the volume of a negative shape of the mold,
- a blow molding unit (**C**) for blow molding the base container in the mold,
- a transporting unit (**D**) comprising the holding means for the base containers,
- a positioning unit (**E**) for positioning the base container in the holding means on the transporting unit (**D**),
- a filling unit (**F**) for filling the base container with a liquid, and
- a closing unit (**G**) for closing the base container in the holding means on the transporting unit (**D**).

Preferably, the closing unit (**G**) comprises, more preferably consists of
- a cap assembling unit (**H**) for positioning a cap on the at least one opening of the base containers in the holding means on the transporting unit (**D**),
- a sealing unit (**I**) for sealing the cap to the base containers in the holding means on the transporting unit (**D**).

The mold selection unit (**A**) comprises a reservoir of molds for base containers and a means for choosing one of the molds from the reservoir and applying said mold to the blow molding unit (**C**). Generally, the mold selection unit (**A**) can be fully automated or a manual means. The mold selection unit (**A**) is configured to select a mold based on the container to be produced, preferably on the volume and/or the application thereof.

The holding means selection unit (**B**) comprises a reservoir of holding means for molds and a means for choosing one of the holding means from the reservoir and applying said mold to the transporting unit (**D**). Generally, the mold selection unit (**B**) can be fully automated or a manual means. The holding means selection unit (**B**) is configured to select a holding means based on the information of the type of the base container, preferably on the information of the volume of the base container and whether the base container has a hanging means attached to the bottom.

The blow molding unit (**C**) is a blow molding unit capable of extrusion blow molding, injection blow molding, or injection stretch blow molding. The blow molding unit (**C**) is configured to receive a mold from the mold selection unit (**A**) and to return a mold to the mold selection unit (**A**). Furthermore, the blow molding unit (**C**) is configured to deliver the produced base containers to a holding means.

The transporting unit (**D**) is configured to transport the holding means for the base container from the blow molding unit (**C**) to the subsequent units such as the cap assembling unit (**G**) and the sealing unit (**H**). The transporting unit preferably comprises a conveyor. More preferably, the conveyor comprises means for attaching the holding means thereto.

The positioning unit (**E**) is configured to deliver the base containers from the molds to the holding means. In one embodiment, the positioning unit (**E**) is at least one guide, which centers the base container in view of the holding means and the mold is configured to drop the base container upon ejection just above the holding means. Thereby, the positioning means (**E**) help to ensure that the base container safely enters the holding means. Further implementations are concerned with robotic arms moving the base container from the mold to the holding means.

The filling means (**F**) preferably comprise at least one tank for the filling liquid, more preferably a valve and more than one tank for the filling liquid. This ensures that the filling unit (**F**) can provide fillings for more than one type of application of the containers. Furthermore, the filling unit (**F**) preferably comprises a filling jet for filling the liquid into the container, preferably by the outlet of the container. Preferably, the filling unit (**F**) further comprises suction means for removing liquid from the container. As such, the filling unit (**F**) can also act as a rinsing unit.

The filling unit (**F**) further preferably comprises a neck holding means for holding the base container. Thereby, the holding means are configured to hold the neck of the container, preferably the flange of the opening of the container. Most preferably, the container comprises a recessed flange below the flange of the opening, which has a smaller diameter than the flange of the opening, and which is attached to the flange of the opening, and the neck holding means are configured to hold the recessed flange.

The system further preferably comprises filling unit adjustment means for the configuration of the filling unit based on the selected mold. Thereby, the filling unit adjustment means can control the type of liquid to be selected in the filling unit (**F**), the pressure of the filling liquid injection, and the volume of the filling liquid.

In a first preferred embodiment, the cap assembling unit (**H**) is configured to assemble the cap in the at least one opening of the container to allow for the subsequent sealing to provide a liquid-tight seal. Preferably, the cap assembling unit (**H**) of the first preferred embodiment is configured to put a cylindrical tube of the cap over a cylindrical tube of the opening, wherein the at least one opening comprises a cylindrical tube in at least one wall of the container, wherein the cylindrical tube extends from the at least one wall, and the cap comprises a cylindrical tube, wherein the inner diameter of the cylindrical tube of the cap is larger than the outer diameter of the cylindrical tube of the opening. Furthermore, the cap assembling unit (**H**) of the first preferred embodiment has at least one reservoir for storing caps and a cap selecting unit to select caps from the at least one reservoir based on the application of the container.

More preferably, in the first preferred embodiment of the cap assembling unit (**H**), the unit is configured to screw the cylindrical tube of the cap on the cylindrical tube of the opening, wherein the inner surface of the cylindrical tube of the cap comprises a thread and the outer surface of the cylindrical tube of the opening comprises a counter thread to said thread.

Most preferably, the cylindrical tube of the cap comprises a flange, preferably at the edge of the cylindrical tube, and the cylindrical tube of the opening comprises a flange at the outer surface, and the cap assembling unit (**H**) of the first preferred embodiment is configured to put the cylindrical tube of the cap over the cylindrical tube of the opening or screw the cylindrical tube of the cap on the cylindrical tube of the opening, until the flange of the cylindrical tube of the cap and the flange of the cylindrical tube of the opening are in contact.

The cap assembling unit (**H**) further preferably comprises a neck holding means for holding the base container. Thereby, the holding means are configured to hold the neck of the container, preferably the flange of the opening of the container. Most preferably, the container comprises a recessed flange below the flange of the opening, which has a smaller diameter than the flange of the opening, and which is attached to the flange of the opening, and the neck holding means are configured to hold the recessed flange.

In a first preferred embodiment of the sealing step unit (**I**), preferably corresponding to the first preferred embodiment of the cap assembling unit (**G**), the unit is configured to provide the assembly of the cap and the opening with a material, which ensures that the assembly is liquid-tight and can withstand pull forces. Preferably, the sealing unit (**I**) is configured to melt, shrink, or extrude polymer material around the assembly of the cap and the opening.

Preferably, the sealing unit (**I**) of the first preferred embodiment comprises an extruder for extruding a polymer, and a sealing mold. Thereby, the sealing mold is configured to be put around the assembly of the cap and the opening. Furthermore, the extruder and the mold are configured to extrude polymer into the mold. More preferably, the mold is configured to be put around the flanges of the cylindrical tubes of the cap and the opening.

Also preferably, the sealing unit (**I**) of the first preferred embodiment is configured to shrink polymer around the assembly of the cap. Preferably, the sealing unit (**I**) comprises means for putting a shrinkable seal, preferably a heat shrinkable seal in the shape of a ring, around the assembly of the cap and the opening. Preferably, the sealing unit (**I**) further comprises a shrinking device, preferably a heat emitting device for shrinking the shrinkable seal.

Also preferably, the sealing unit (**I**) of the first preferred embodiment is configured to melt a polymer around the assembly of the cap and the opening. Preferably, the sealing unit (**I**) of the first preferred embodiment comprises means for putting a meltable seal, preferably an overmold ring, around the assembly of the cap and the opening. More preferably, the sealing unit (**I**) of the first preferred embodiment comprises melting device, preferably a heat emitting device. Preferably, the melting device is a heatable mold. More preferably, the heatable mold is configured to be put around the seal over the assembly of the cap and the opening and to heat the mold to melt the seal. Most preferably, the meltable seal and/or the heatable mold are configured to be put around the flanges of the cylindrical tubes of the cap and the opening.

The sealing unit (**I**) further preferably comprises a neck holding means for holding the base container. Thereby, the holding means are configured to hold the neck of the container, preferably the flange of the opening of the container. Most preferably, the container comprises a recessed flange below the flange of the opening, which has a smaller diameter than the flange of the opening, and which is attached to the flange of the opening, and the neck holding means are configured to hold the recessed flange.

In a second preferred embodiment, the cap assembly unit (**H**) is configured to put a cylindrical lid on the at least one opening, preferably partially protruding into the at least one opening, and subsequently put the cylindrical tube of the cap over the cylindrical tube of the opening.

More preferably, in the first preferred embodiment of the cap assembling unit (**H**), the inner surface of the cylindrical tube of the cap comprises a thread and the outer surface of the cylindrical tube of the opening comprises a counter thread to said thread, and wherein the cap assembling unit (**H**) is configured to put the cylindrical tube of the cap over the cylindrical tube of the opening until the thread and the counter thread are contacted.

In a second preferred embodiment of the sealing unit (**I**), preferably corresponding to the second preferred embodiment of the cap assembling unit (**G**), the sealing unit (**I**) is configured to screw the assembled cap on the cylindrical tube of the opening thereby putting pressure in the lid and sealing the at least one opening.

Most preferably, in the second preferred embodiment of the sealing unit (**I**), the cylindrical tube of the cap comprises a tamper evidence part and the sealing unit (**I**) is configured to screw the cap until a position is reached, which causes the tamper evidence part to be destroyed when being unscrewed.

In a preferred embodiment, the system further comprises a rinsing unit (**K**) for rinsing the base container before being filled by the filling unit (**F**). The rinsing unit (**K**) preferably comprise at least one tank for the rinsing fluidFurthermore, the rinsing unit (**K**) preferably comprises a rinsing jet for inserting the fluid into the container, preferably by the outlet of the container. The rinsing unit (**K**) further comprises suction means for removing fluid from the container.

The rinsing unit (**K**) further preferably comprises a neck holding means for holding the base container. Thereby, the holding means are configured to hold the neck of the container, preferably the flange of the opening of the container. Most preferably, the container comprises a recessed flange below the flange of the opening, which has a smaller diameter than the flange of the opening, and which is attached to the flange of the opening, and the neck holding means are configured to hold the recessed flange.

If the system comprises a rinsing unit (**K**), the system further preferably comprises rinsing unit adjustment means for the configuration of the rinsing unit based on the selected mold. Thereby, the rinsing unit adjustment means can control the type of fluid to be selected in the rinsing unit (**K**), the pressure of the rinsing injection, and the volume of the rinsing fluid.

Preferably, the system according to the present invention further comprises a labeling unit (**L**) for labeling the base container. The labeling unit (**L**) is configured to either print directly on the at least one wall of the container or to print onto a label, preferably made from paper or a polymer sheet, and glue the label on the at least one wall of the container. Hence, preferably, in case the system comprises a labeling unit (**L**), the system further comprises label preparing means for configuration of the labeling unit (**L**) based on the size of the base container of the selected mold.

Finally, the system according to the present invention may comprise inspection means for inspecting the integrity of the container.

### Holding means

The holding means from the group of holding means comprises a footprint for being attached to the transporting unit (**D**). Preferably, the footprints of all holding means of the group of holding means are identical. Further preferably, each holding means is formed to achieve the same distance between the footprint and the opening of the base container if the base container corresponding to the respective holding means is inserted in the holding means. This ensures that the opening and the neck of the container, respectively, are always at the same relative height in view of the units for further processing the container.

### Mold

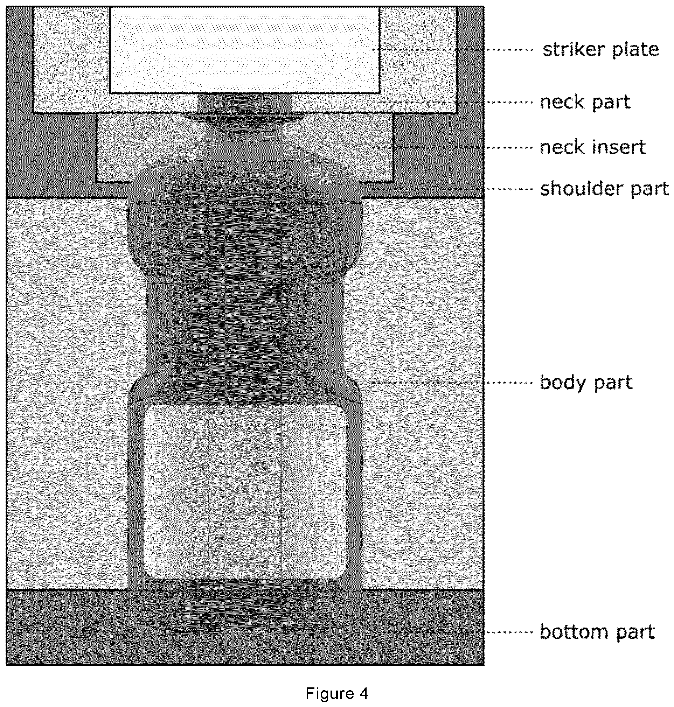

Each of the molds of the group of molds according to the process and/or the system according to the present invention comprises, preferably consists of, a bottom plate, a body part, a shoulder part, a neck insert, a neck part, and a cutting plate. Hence, preferably, the mold is a modular mold, wherein the parts can be disassembled and assembled. A respective schematic view thereof is provided in Figure 4.

Preferably, each of the molds of the group of molds comprises the negative shape of a base container, wherein the base container comprises:
- a bottom part (**1**),
- a body part (**2**),
- a cylindrical or conical upper body part (**3**) comprising the at least one opening,
wherein the dimensions of the bottom parts of the base container of the negative shape of the base container of the molds of the group of molds are identical in view of the base area of the bottom of the base container. It should be understood that the basic difference between a container for infusion application and a container for irrigation application is that the container for infusion application is positioned upside down, i.e., has hanging means attached to the bottom, wherein the container for irrigation application is used in upright position, therefore not having a hanging means attached to the bottom.

Preferably, the dimensions of the opening of the base container of the negative shape of the base container of the molds of the group of molds are identical with exception of the hanging means.

Even more preferably, the bottom part (**1**) of the negative shape of the base container has an oval shape, wherein the oval shape is a shape selected from the list consisting of an ellipsoid, a rectangle with quadrant corners, and a stadium, preferably is a stadium.

Containers for infusion application usually have a base area having an oval shape. Such a base area assures that the container is collapsible, e.g., changes its three-dimensional shape towards a flattened, more two-dimensional-like shape in that the opposite walls move together during emptying of the container. Thus, the molds of the production line of the prior art are usually configured to produce such a shape, the carriers of the production line of the prior art are usually configured to hold such a shape and each other machine of the prior art is usually configured to handle containers with such a base shape.

It has now been found out that with the modification of the shape of a container having an oval-shaped base area, a collapsing of such container can be prevented. As a result, such a container is producible on a production line, which is also suitable for producing container for infusion application. Nevertheless, as the collapsing is prevented, such container can be used for irrigation applications.

Hence, preferably, the body part (**2**) of the negative shape of a base container of each of the molds for a base container for irrigation of the group of molds comprises
- a cylindrical or conical lower body part (**4**) comprising a lower bottom area (**5**) and a lower top area (**6**),
- a first transition part (**7**),
- a cylindrical or conical middle body part (**8**) comprising a middle bottom area (**9**) and middle top area (**10**),
- a second transition part (**11**), and

wherein the bottom part (**1**) is fluidly connected with the lower body part (**4**) via the lower bottom area (**5**), the first transition part (**7**) is fluidly connected with the lower body part (**4**) via the lower top area (**6**), the first transition part (**7**) is fluidly connected with the middle body part (**8**) via the middle bottom area (**9**), the second transition part (**11**) is fluidly connected with the middle body part (**8**) via the middle top area (**10**),
and the second transition part (**11**) is fluidly connected with the upper body part (**12**) via the upper bottom area (**13**),
wherein the lower bottom area (**5**), the lower top area (**6**), the middle bottom area (**9**), the middle top area (**10**), and the upper bottom area (**13**) have an oval shape, wherein the oval shape is a shape selected from the list consisting of an ellipsoid, a rectangle with quadrant corners, and a stadium, preferably is a stadium, and
wherein the surface area of the middle bottom area (**9**) is lower than the surface area of the lower top area (**6**) and wherein the surface area of the middle top area (**10**) is lower than the surface area of the upper bottom area (**13**).

Preferably, the oval shape is a shape selected from the list consisting of an ellipsoid, a rectangle with quadrant corners, and a stadium shape, more preferably is a stadium.

Preferably, the container of the present invention without the first transition part (**7**), without the cylindrical or conical middle body part (**8**), and/or without the second transition part (**11**) is a collapsible container. Hence, as soon as these features are removed from the base shape of the container according to the present invention, the shape is suitable for collapsing during emptying and, thus, suitable for infusion application.

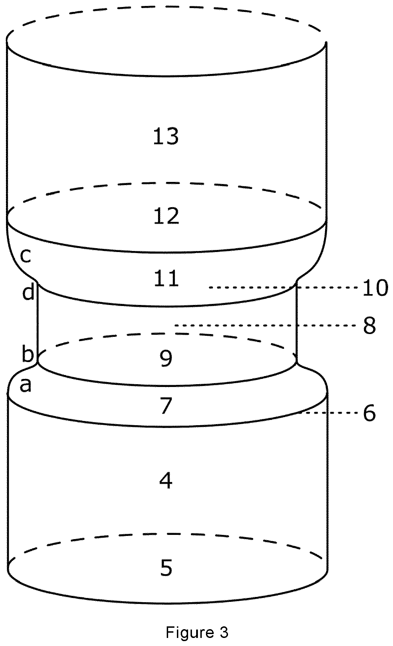

It should be understood that the embodiment of Figure 3 does not show the most general embodiment according to the present invention. Generally, the first and second transition parts can have any shape, which allows for a constantly decreasing or increasing diameter. Hence, also linear gradients of the diameter are conceivable. Also generally, the diameter of the upper, the lower, and/or the middle body part are not necessarily constant, but could also be varying, i.e., having a conical shape.

Nevertheless, preferably, the shape of the lower body part (**4**), the middle body part (**8**), and/or the upper body part (**12**) is cylindrical or conical. The advantage of such an embodiment is that the space is used most economically, in particular when the containers are stored in staples. Even more preferably, the shape of the middle body part (**8**) is cylindrical. Such an embodiment has the advantage of having an improved grip. The container according to any of the preceding claims, wherein the shape of the lower body part (**4**) and/or the upper body part (**3**) is cylindrical. Most preferably, the lower body part (**4**), the middle body part (**8**), and/or the upper body part (**3**) is cylindrical. This allows for best usage of space, best grip, and best handling during the production process.

Likewise, the lower bottom area (**5**), the lower top area (**6**), and the upper bottom area (**12**) preferably have the same shape. This has the effect of a generally unique shape throughout the body. In particular if combined with a cylindrical shape. Hence, most preferably, in the container according to the present invention the lower bottom area (**5**), the lower top area (**6**), and the upper bottom area (**12**) have the same shape and the lower body part (**4**), the middle body part (**8**), and/or the upper body part (**3**) is cylindrical.

As set out above, generally, the first and second transition parts can have any shape, which allows for a constantly decreasing or increasing diameter, and, hence, also linear gradients of the diameter.

However, preferably, the shape of the first and/or the second transition parts (**7, 11**), more preferably the shape of the first and the second transition parts (**7, 11**), are formed as indicated in Figure 3. Such a shape allows for a secure and still convenient grip of the container.

Hence, preferably, the shape of the first transition part (**9**) is a cone, wherein in the cross section of the cone the shape of the rotational surface of the cone can be described by an asymmetric sigmoid function, wherein the change of slope in the curved area of the sigmoid function (**a**), which is closer to the lower body part (**4**), is smaller than the change of slope in the curved area of the asymmetric sigmoid function (**b**), which is closer to the middle body part (**8**).

Likewise, preferably, the shape of the second transition part (**11**) is a cone, wherein in the cross section of the cone the shape of the rotational surface of the cone can be described by an asymmetric sigmoid function, wherein the change of slope in the curved area of the sigmoid function (**c**), which is closer to the upper body part (**12**), is smaller than the change of slope in the curved area of the asymmetric sigmoid function (**d**), which is closer to the middle body part (**8**).

Preferably, the at least one diameter of the lower top area (**6**) and the middle bottom area (**9**) have the same length and/or at least one diameter of the upper bottom area (**13**) and the middle bottom area (**9**) have the same length.

Likewise, preferably, the main axes of the lower top area (**6**) and the middle bottom area (**9**) are parallel and/or the main axes of the upper bottom area (**13**) and the middle bottom area (**9**) are parallel.

Also preferably, the height of the middle body part (**8**) is lower than the height of the lower body part (**4**), the height of the middle body part (**8**) is lower than the height of the upper body part (**12**), and/or the height of the lower body part (**4**) is larger than the height of the upper body part (**12**).

Preferably, the symmetry axis of the lower bottom area (**5**), the lower top area (**6**), the middle bottom area (**9**), the middle top area (**10**), and/or the upper bottom area (**13**) are parallel, more preferably identical.

## Claims

1. A process for producing a container, the process comprising the steps of:
- selecting in a mold selection step a mold for a base container from a group of molds consisting of molds for a base container for infusion application and molds for a base container for irrigation;
- mold blowing, preferably extrusion mold blowing, in a blowing step the base container in the mold, whereby the base container comprises at least one opening;
- removing in a removal step the base container from the mold;
- filling in a filling step the base container with a liquid;
- closing in a closing step the base container thereby forming the produced container;
- sterilizing in a sterilization step the produced container;
wherein the container is suitable for infusion application or for irrigation application, and
wherein the closing step preferably comprises, more preferably consists of the following steps:
- assembling in a cap assembling step a cap to the at least one opening of the base container;
- sealing in a sealing step the cap to the base container thereby forming the produced container.

2. A system for producing containers, wherein the containers are suitable for infusion application or for irrigation application, the system comprising:
- a mold selection unit (**A**) for selecting a mold for a base container comprising at least one opening from a group of molds consisting of molds for a base container for infusion application and molds for a base container for irrigation application,
- a holding means selection unit (**B**) for selecting a holding means for the base containers from a group of holding means according to the volume of a negative shape of the mold,
- a blow molding unit (**C**) for blow molding the base container in the mold,
- a transporting unit (**D**) comprising the holding means for the base containers,
- a positioning unit (**E**) for positioning the base container in the holding means on the transporting unit (**D**),
- a filling unit (**F**) for filling the base container with a liquid,
- a closing unit (**G**) for closing the base containers in the holding means on the transporting unit (**D**).

3. The system according to claims 8 or 9, wherein the system further comprises:
- filling preparing means for preparation of the liquid based on the application of the base container of the selected mold.

4. The system according to any of the preceding claims 8 to 10, wherein the closing unit (**G**) further comprises, preferably consists of:
- a cap assembling unit (**H**) for positioning a cap on the at least one opening of the base containers in the holding means on the transporting unit (**D**),
- a sealing unit (**I**) for sealing the cap to the base containers in the holding means on the transporting unit (**D**), and.
- optionally a cap selection unit (**J**) for selecting the cap for the base containers in the holding means on the transporting unit (**D**).

5. The process according to any of the preceding claims 1 or the system according to any of the preceding claims 2 to 4, wherein each holding means from the group of holding means comprises a footprint for being attached to the transporting unit, wherein the footprints of all holding means of the group of holding means are identical.

6. The process or the system according to claim 5, wherein each holding means is formed to achieve the same distance between the footprint and the opening of the base container if the base container corresponding to the respective holding means is inserted in the holding means.

7. The process according to any of the preceding claims 1, 5, or 6, or the system according to any of the preceding claims 2 to 6, wherein each of the molds of the group of molds comprises, preferably consists of, a bottom plate, a body part, a shoulder part, a neck insert, a neck part, and a cutting plate.

8. The process according to any of the preceding claims 1, 5 to 7, or the system according to any of the preceding claims 2 to 7, wherein each of the molds of the group of molds comprises the negative shape of a base container, wherein the base container comprises:
- a bottom part (**1**),
- a body part (**2**),
- a cylindrical or conical upper body part (**3**) comprising the at least one opening.

9. The process or system according to claim 8, wherein the bottom part (**1**) of the negative shape of the base container has an oval shape, wherein the oval shape is a shape selected from the list consisting of an ellipsoid, a rectangle with quadrant corners, and a stadium, preferably is a stadium.

10. The process or the system according to any of the preceding claims 8 and 9, wherein the body part (**2**) of base container of the negative shape of a base container of each of the molds for a base container for irrigation of the group of molds comprises
- a cylindrical or conical lower body part (**4**) comprising a lower bottom area (**5**) and a lower top area (**6**),
- a first transition part (**7**),
- a cylindrical or conical middle body part (**8**) comprising a middle bottom area (**9**) and middle top area (**10**),
- a second transition part (**11**), and
wherein the bottom part (**1**) is fluidly connected with the lower body part (**4**) via the lower bottom area (**5**), the first transition part (**7**) is fluidly connected with the lower body part (**4**) via the lower top area (**6**), the first transition part (**7**) is fluidly connected with the middle body part (**8**) via the middle bottom area (**9**), the second transition part (**11**) is fluidly connected with the middle body part (**8**) via the middle top area (**10**), and the second transition part (**11**) is fluidly connected with the upper body part (**12**) via the upper bottom area (**13**),
wherein the lower bottom area (**5**), the lower top area (**6**), the middle bottom area (**9**), the middle top area (**10**), and the upper bottom area (**13**) have an oval shape, wherein the oval shape is a shape selected from the list consisting of an ellipsoid, a rectangle with quadrant corners, and a stadium, preferably is a stadium, and
wherein the surface area of the middle bottom area (**9**) is lower than the surface area of the lower top area (**6**) and wherein the surface area of the middle top area (**10**) is lower than the surface area of the upper bottom area (**13**).

11. The process or the system according to claim 10, wherein the shape of the lower body part (**4**), the middle body part (**8**), and/or the upper body part (**12**) is cylindrical or conical.

12. The process or the system according to any of the preceding claims 10 and 11, wherein the shape of the middle body part (**8**) is cylindrical.

13. The process or the system according to any of the preceding claims 10 to 12,
wherein the shape of the lower body part (**4**) and/or the upper body part (**12**) is cylindrical.

14. The process or the system according to any of the preceding claims 10 to 13,
wherein the lower bottom area (**5**), the lower top area (**6**), and the upper bottom area (**13**) have the same shape.

15. The process or the system according to any of the preceding claims 10 to 14,
wherein the main axes of the lower top area (**6**) and the middle bottom area (**9**) are parallel and/or the main axes of the upper bottom area (**13**) and the middle bottom area (**9**) are parallel.
